(19)

Europäisches
Patentamt
European
Patent Office
Office européen
des brevets

(11) **EP 4 385 848 A1**

(12) **EUROPEAN PATENT APPLICATION**

(43) Date of publication:
**19.06.2024 Bulletin 2024/25**

(21) Application number: **23216356.8**

(22) Date of filing: **13.12.2023**

(51) International Patent Classification (IPC):
***B60W 60/00*** (2020.01)     ***G01S 7/41*** (2006.01)
***G01S 13/931*** (2020.01)     ***G01S 17/931*** (2020.01)

(52) Cooperative Patent Classification (CPC):
**G01S 13/931; B60W 60/00259; G01S 7/41;
G01S 17/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022 GB 202218827**

(71) Applicant: **Aptiv Technologies AG
8200 Schaffhausen (CH)**

(72) Inventor: **PETTERSSON, Adam
Dublin, 2 (IE)**

(74) Representative: **Lewis Silkin LLP
Arbor
255 Blackfriars Road
London SE1 9AX (GB)**

(54) **PERCEPTION SENSOR PROCESSING METHOD AND PROCESSING UNIT FOR PERFORMING THE SAME**

(57)     Method for processing perception sensor data in an ego vehicle, comprising: receiving sensor data associated with locations of detections in a coordinate system having a y-axis and an x-axis. A priority value is assigned to the detections based on their location in the coordinate system. The priority values assigned to detections vary based on the based on the corresponding location of the detections in the coordinate system according to a pre-selected prioritisation scheme. Output data is then generated based on the detections and the assigned priority values.

Fig. 3

EP 4 385 848 A1

**Description**

**Field**

The present disclosure relates to a method of processing perception sensor detections and a processing unit for implementing the same. In particular, the present disclosure concerns automotive sensor processing methods and automotive processing units for processing perception sensor data, and most particularly RADAR sensor data. The disclosure is relevant to advanced driver assistance systems and autonomous driving technologies. Moreover, the disclosure concerns automotive electronic control units and software for implementing the above methods.

**Background**

Many modern vehicles are fitted with perception sensor systems, such as RADAR and LIDAR system, to provide localization data. Typically, sensor data from multiple sensors within a system are fused to provide for more accurate localisation of the vehicle on the road. This fused sensor data is then processed to provide information about objects in the surrounding area. However, RADAR and LIDAR systems will typically receive a significant number of detections. Consequently, the computational demands required to process and track all these detections becomes excessively high in practical applications, such as in electronic control units within vehicles. Accordingly, to focus processing resource on the most useful objects, most conventional RADAR or LIDAR processing methods will prioritise object detections based on their proximity. Accordingly, detections that are closer to the vehicle will be prioritized above those further away. For example, subsequent downstream processing resource may have capacity to process up to a fixed number of object detections. For instance, embedded systems may have a fixed number of processing paths. As such, a prioritisation score may be used to determine which detections are allocated to the available processing slots, thereby down selecting the input sensor data. This is thereby intended to focus processing on the most relevant objects.

Nevertheless, there remains a need to improve automotive perception sensor processing. That is, because the systems are reliant on processing noisy and uncertain sensor measurement data, the processing demands to interpret this data remains very high. As senor sensitivity increases, and more sensors are used in combination, the need to effectively prioritise the most important objects for downstream processing only increases.

In view of the above, there remains a need for improved methods and systems for processing sensor detections.

**Summary**

According to a first aspect, there is provided a method for processing perception sensor data in an ego vehicle, comprising: receiving sensor data associated with locations of detections in a coordinate system having a y-axis and an x-axis; assigning a priority value to the detections based on their location in the coordinate system; and generating output data based on the corresponding location of the detections and the assigned priority values, wherein the priority values are assigned based on the detections location in the coordinate system according to a pre-selected prioritisation scheme.

In this way, rather than merely prioritising detections based on proximity to the origin of the coordinate system, which is typically the location of the ego vehicle in automotive applications, priority can be more heavily weighted to objects according to a pre-selected prioritisation scheme. For example, the prioritisation scheme may prioritise objects ahead of the vehicle, rather than to the side or behind it. In this respect, for example, for most ADAS (advanced driver assistance systems) functions, such as ACC (adaptive cruise control), objects in front of the vehicle are more useful. Accordingly, by adopting an asymmetric prioritisation scheme, processing of objects for ADAS and autonomous driving systems can be optimised.

In embodiments, the pre-selected prioritisation scheme is selected based on a set of criteria. In embodiments, the criteria a may be selected based on, for example, driving conditions, vehicle operating parameters, and driving mode. In this way, the safety of the vehicle occupants may be enhanced based on prevailing conditions.

In embodiments, the prioritisation scheme is configured to assign areas in the coordinate system with higher priority.

In embodiments, the sensor data is RADAR data. In this way, the tracking of objects in RADAR data, which provides both location and velocity information, can be optimized.

In embodiments, the step of generating output data comprises down selection based on the assigned priority values. In this way, downstream processing resource can be focused on the most useful detections.

In embodiments, the step of generating output data comprises selecting detections having an assigned priority value above a threshold. In this way, downstream processing resource can be restricted to only the most useful detections needed for subsequent processing.

In embodiments, the threshold is determined based on a number of available tracking channels for detections, and the step of generating output data comprises selecting a detection to associate with each available tracking channel based on its assigned priority value. In this way, detections may be selected in order of priority based on the number of subsequently available processing paths. This may be used, for example, with embedded systems which may only track a limited number of objects at one time.

In embodiments, the method further comprises the step of forwarding the generated data for downstream processing.

In embodiments, the prioritisation scheme is configured to assign a higher priority to detections coming from a selected location relative to the ego vehicle. For example, in an embodiment, the rate of variation between assigned priority the x- and y- axis may be configured such that a higher priority is assigned to detections in front of the origin in the coordinate system. In this way, objects ahead of the vehicle, and more centrally located, may for example be prioritised above those to the side.

In embodiments, the perception sensor data is automotive perception sensor data and an origin of the coordinate system represents an ego vehicle.

According to a second aspect, there is provided a perception sensor processing unit, comprising: an input for receiving sensor data associated with locations of detections in a coordinate system having a y-axis and an x-axis; a prioritisation block for assigning a priority value to detections based on their location in the coordinate system; and an output for generating output data based on the detections and the assigned priority values, wherein the priority values are assigned based on the corresponding location of the detections in the coordinate system according to a pre-selected prioritisation scheme. In this way a processor unit may be provided for implementing the above method. It will be understood that the processing unit may be provided as a multidomain controller or other automotive electronic control unit.

In embodiments, the sensor data is RADAR data.

In embodiments, the perception sensor processing unit is an automotive electronic control unit and the origin of the coordinate system represents an ego vehicle.

In embodiments, the step of generating output data comprises down selection based on the assigned priority values.

In embodiments, the step of generating output data comprises down selection based on the assigned priority values.

In embodiments, the pre-selected prioritisation scheme is selected based on a set of criteria.

In embodiments, the prioritisation scheme is configured to assign areas in the coordinate system with higher priority.

According to a third aspect, there is provided a non-transient computer readable medium comprising instructions which, when executed by a computer, implement a method according to any one of the above statements.

According to a fourth aspect, there is provided a computer software product comprising instructions which, when executed by a computer, implement a method according to any one of the above statements.

## Brief Description of Drawings

Illustrative embodiments will now be described with reference to the drawings in which:

Figure 1 shows a visualisation of a conventional prioritisation method for RADAR sensor data;
Figure 2 shows a schematic representation of a RADAR sensor processing unit according to an illustrative embodiment of the invention; and
Figure 3 shows a visualisation of the asymmetric prioritisation method for RADAR sensor data used by the processing unit shown in Figure 2.

## Detailed Description

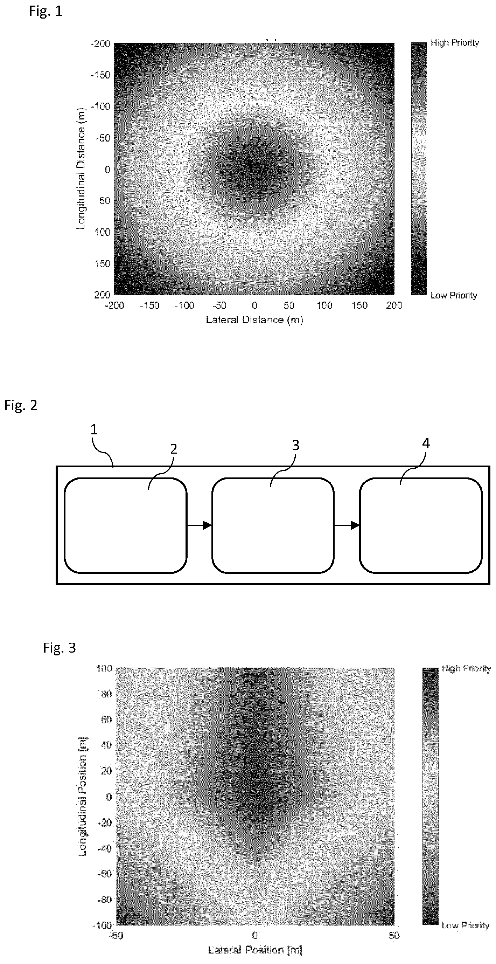

Figure 1 shows a visualisation of a conventional prioritisation method based on proximity. The ego vehicle is at the centre or origin at coordinates 0,0, and objects detected closer to the centre are given the highest priority. Objects further away are assigned a lower priority. Accordingly, the priority is set based on the distance of the object from the centre according to:

$$Priority\ Score\ =\ -(long\_pos^2\ +\ lat\_pos^2)$$

The present inventor has identified that an issue with the above conventional methodology is that objects behind and to the side of the ego vehicle are prioritized equally high as the objects in front of the vehicle. However, in practice, objects in front of the vehicle, even if further away, are more useful for downstream processing functions. For example, objects in the vehicles' path, ahead in the direction of travel, are important for accurately implementing advanced driver assistance systems or autonomous driving control.

In view of the above, in the embodiment shown in Figure 1, an asymmetric prioritisation method is adopted, which gives a higher priority or weighting to objects in front of the vehicle, rather than to the sides or behind.

In this connection, Figure 2 shows a schematic representation of a RADAR sensor processing unit 1 according to the illustrative embodiment of the invention. In this embodiment, the processing unit 1 comprises a RADAR input 2, a prioritisation block 3, and a downstream processing block 4. Data from the RADAR sensor system is fed into the RADAR input 2, from where it is first processed to prioritisation block 3. The processed data output from the prioritisation block is then fed to a downstream processing block 4, for example which may form part of the vehicles ADAS or autonomous driving systems, for instance for implementing adaptive cruise control.

In this connection, the prioritisation block 3 applies the asymmetric prioritisation method according to the visualisation shown in Figure 3.

In other embodiments more complex prioritisation schemes may be used. In such embodiments, the assignment of a priority value may be more complex and hence is not as quick computationally. However, it may be used to provide, for example, a wider region of high prioritisation ahead of the vehicle, facilitating better detection of wider road junctions, for example.

Accordingly, with the above methods, detections in front of the ego vehicle are prioritised for subsequent processing. As such, objects ahead of the vehicle are prioritised such that more of these objects are identified and tracked in downstream processing. Accordingly, better performance in relation to these objects may be achieved, thereby enabling higher availability of functions that rely on objects in front of the ego vehicle.

Accordingly, with the above processing unit and prioritisation method, perception sensor data may be processed more effectively than existing solutions. For example, additional tracking and perception steps may be focussed on the most relevant objections, thereby minimising computational complexity, and hence increasing the ability to provide real time applications.

It will be understood that the embodiments illustrated above show applications only for the purposes of illustration. In practice, embodiments may be applied to many different configurations, the detailed embodiments being straightforward for those skilled in the art to implement.

**Claims**

**1.** A method for processing perception sensor data in an ego vehicle, comprising:

receiving sensor data associated with locations of detections in a coordinate system having a y-axis and an x-axis;
assigning a priority value to the detections based on their location in the coordinate system; and
generating output data based on the detections and the assigned priority values,
wherein the priority values are assigned based on the corresponding location of the detections in the coordinate system according to a pre-selected prioritisation scheme.

**2.** A method according to claim 1, wherein the pre-selected prioritisation scheme is selected based on a set of criteria.

**3.** A method according to claim 1 or 2, wherein the prioritisation scheme is configured to assign areas in the coordinate system with higher priority.

**4.** A method according to any one of claims 1 to 3, wherein the step of generating output data comprises down selection based on the assigned priority values.

**5.** A method according to any preceding claim, wherein the step of generating output data comprises selecting detections having an assigned priority value above a threshold.

**6.** A method according to claim 5, wherein the threshold is determined based on a number of available tracking channels for detections, and the step of generating output data comprises selecting a detection to associate with each available tracking channel based on its assigned priority value.

**7.** A method according to any preceding claim, further comprising the step of forwarding the generated data for downstream processing.

**7.** A method according to any preceding claim, wherein the prioritisation scheme is configured to assign a higher priority to detections coming from a selected location relative to the ego vehicle.

**8.** A method according to any preceding claim, wherein the sensor data is RADAR data.

**9.** A perception sensor processing unit, comprising:

an input for receiving sensor data associated with locations of detections in a coordinate system having a y-axis and an x-axis;
a prioritisation block for assigning a priority value to the detections based on their location in the coordinate system; and
an output for generating output data based on the detections and the assigned priority values,
wherein the priority values are assigned based on the corresponding location of the detections in the coordinate system according to a pre-selected prioritisation scheme.

**10.** A perception sensor processing unit according to claim 9, wherein the perception sensor processing unit is an automotive electronic control unit and the origin of the coordinate system represents an ego vehicle.

**11.** A perception sensor processing unit according to any one of claims 9-10, wherein the step of generating output data comprises down selection based on the assigned priority values.

**12.** A perception sensor processing unit according to any one of claims 9-11, wherein the step of generating output data comprises down selection based on the assigned priority values.

**13.** A perception sensor processing unit according to any one of claims 9-12, wherein the pre-selected prioritisation scheme is selected based on a set of criteria.

**14.** A perception sensor processing unit according to any one of claims 9-13, wherein the prioritisation scheme is configured to assign areas in the coordinate system with higher priority.

**15.** A non-transient computer readable medium comprising instructions which, when executed by a computer, implement a method according to any one of claims 1 to 8.

Fig. 1

Fig. 2

Fig. 3

Europäisches
Patentamt

European
Patent Office

Office européen
des brevets

# EUROPEAN SEARCH REPORT

Application Number

EP 23 21 6356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 161 464 B2 (UATC LLC [US]) 2 November 2021 (2021-11-02) * abstract; figures 1, 5-8 * * column 1, line 30 - column 2, line 55 * * column 7, line 38 - column 10, line 35 * * column 15, line 44 - column 19, line 44 * * column 26, line 37 - line 55 * * column 3, line 25 - column 6, line 24 * | 1-15 | INV. B60W60/00 G01S7/41 G01S13/931 G01S17/931 |
| X A | US 2018/373992 A1 (YIN XIAOTIAN [US] ET AL) 27 December 2018 (2018-12-27) * abstract; figures 1,8-11 * * paragraph [0003] - paragraph [0024] * * paragraph [0042] - paragraph [0045] * * paragraph [0070] - paragraph [0107] * | 1,5,9, 12,15 2-4,6-8, 10,11, 13,14 | |
| X A | US 10 216 189 B1 (UBER TECHNOLOGIES INC [US]) 26 February 2019 (2019-02-26) * abstract; figures 1-3,6 * * column 1, line 35 - column 2, line 45 * * column 9, line 50 - column 16, line 4 * * column 23, line 54 - column 25, line 52 * | 1,7,9,15 2-6,8, 10-14 | TECHNICAL FIELDS SEARCHED (IPC) B60W G01S |
| X A | WO 2020/079698 A1 (A D KNIGHT LTD [IL]) 23 April 2020 (2020-04-23) * abstract; figures 1-2 * * paragraph [0133] - paragraph [0145] * * paragraph [0006] - paragraph [0035] * | 1,2,8,9, 13,15 3-7, 10-12,14 | |

The present search report has been drawn up for all claims

| Place of search | Date of completion of the search | Examiner |
|---|---|---|
| Munich | 30 April 2024 | López de Valle, J |

EPO FORM 1503 03.82 (P04C01)

## ANNEX TO THE EUROPEAN SEARCH REPORT
## ON EUROPEAN PATENT APPLICATION NO.

EP 23 21 6356

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2024

| Patent document cited in search report | | Publication date | Patent family member(s) | | Publication date |
|---|---|---|---|---|---|
| US 11161464 | B2 | 02-11-2021 | EP | 3724737 A1 | 21-10-2020 |
| | | | US | 2019217791 A1 | 18-07-2019 |
| | | | US | 2019220013 A1 | 18-07-2019 |
| | | | US | 2019220014 A1 | 18-07-2019 |
| | | | US | 2022055549 A1 | 24-02-2022 |
| | | | WO | 2019140171 A1 | 18-07-2019 |
| US 2018373992 | A1 | 27-12-2018 | CN | 110832497 A | 21-02-2020 |
| | | | EP | 3635624 A1 | 15-04-2020 |
| | | | US | 2018373992 A1 | 27-12-2018 |
| | | | WO | 2019001346 A1 | 03-01-2019 |
| US 10216189 | B1 | 26-02-2019 | CN | 111133485 A | 08-05-2020 |
| | | | EP | 3673470 A1 | 01-07-2020 |
| | | | JP | 7199421 B2 | 05-01-2023 |
| | | | JP | 2020531993 A | 05-11-2020 |
| | | | US | 10216189 B1 | 26-02-2019 |
| | | | US | 2019146507 A1 | 16-05-2019 |
| | | | US | 2021382488 A1 | 09-12-2021 |
| | | | WO | 2019040349 A1 | 28-02-2019 |
| WO 2020079698 | A1 | 23-04-2020 | NONE | | |

EPO FORM P0459

For more details about this annex : see Official Journal of the European Patent Office, No. 12/82